# EUROPEAN PATENT SPECIFICATION

(11) **EP 2 570 332 B1**
(45) Date of publication and mention of the grant of the patent: **16.07.2014**
(21) Application number: 12179090.1
(22) Date of filing: 02.08.2012
(51) Int. Cl.: B62D 11/04, B62D 11/10, B66F 9/075

(54) **An improved traction axle for work machines**
Verbesserte Antriebsachse für Arbeitsmaschine
Essieu de traction pour machine de travail

(30) Priority: 15.09.2011 IT MO20110232
(43) Date of publication of application: 20.03.2013
(73) Proprietor: FIVES OTO S.P.A., 42022 Boretto, Reggio Emilia (IT)
(72) Inventor: Chezzi, Aleardo, 42022 BORETTO, REGGIO EMILIA (IT); Anesi, Andrea, 42049 SANT'ILARIO D'ENZA, REGGIO EMILIA (IT)
(74) Representative: Colò, Chiara

(56) References cited:
- EP-A2- 1 038 759
- WO-A1-97/02975
- FR-A- 781 404
- US-A- 2 542 157
- US-A- 4 776 236
- US-A- 4 882 947
- US-A- 5 910 060
- US-B1- 6 540 633

## Description

The present invention relates to a traction axle for self-propelling work machines. Document US 5 910 060 describes a traction axle according to the preamble of claim 1.

In particular, the invention relates to the front traction axle of lift trucks.

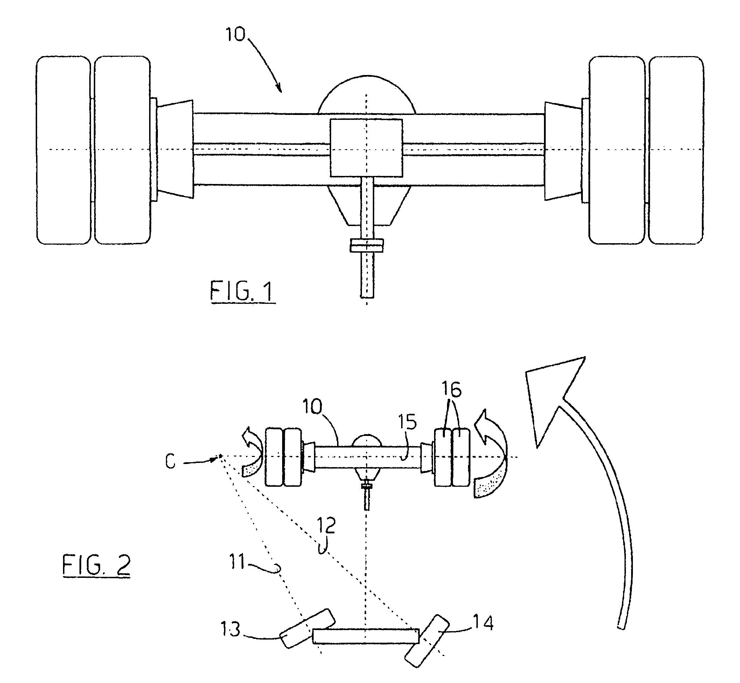

The traditional traction axle of self-propelling work machines destined for movement of goods in specific areas, such as ports or areas in general set aside for sorting containers and general goods, comprises, as is known, a differential group arranged centrally on the axle, from which the drive transmission semi-axles depart towards the two gear-reducer groups complete with brakes, which, in consideration of the high traction torques and loads in play, generally comprise two or more twinned wheels. An axle 10 of this type is schematically illustrated in figure 1.

As in all traditional traction axes, when the work machine steers, the two wheel groups rotate at different velocities but in the same rotating direction, and the difference in velocity between the two wheel groups is greater the smaller the steering radius required. Figure 2 illustrates that the centre of rotation C of the vehicle, during steering, is given by the conjoining point of the axes 11, 12 of the steering wheels 13, 14 and that the conjoining point lies on the axis 15 of the axle 10, in any case in an external position thereto. The configuration illustrated in the figure might well correspond to the minimum steering radius obtainable. This means that the steering space cannot be less than a limit constituted by the circumference having the centre positioned in the centre of rotation C denoted in figure 2 and a radius equal to the distance of the external pair of wheels 16, from the centre of rotation.

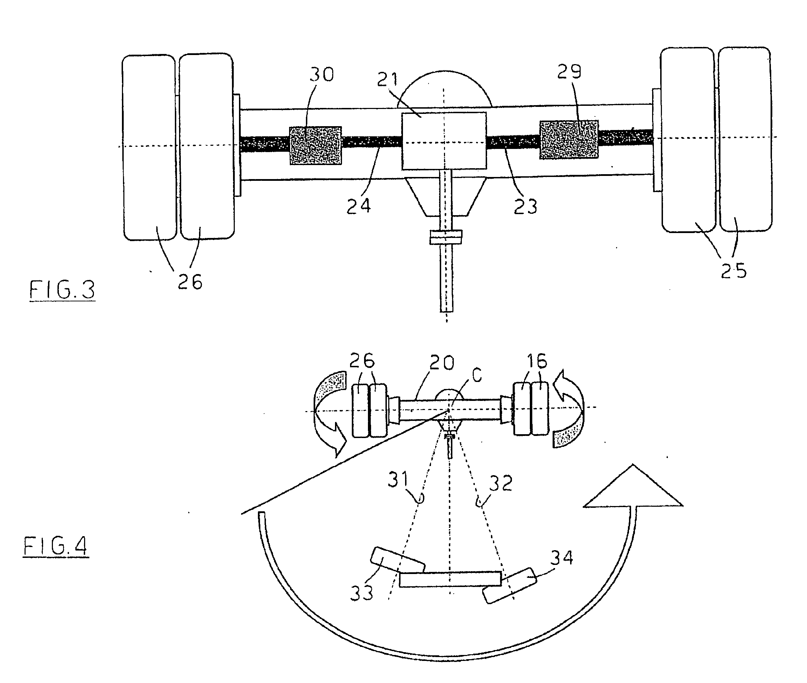

With the aim of increasing the manoeuvring capacity of these work machines, a solution has recently been introduced, object of an industrial patent in the name of the present applicant, with which the centre of rotation of the vehicle can be located in an intermediate position between the two wheels of the axle such as to allow very small radius steering spaces to be achieved. Indeed said centre of rotation C can be located in the central position of the axle 20, coinciding with the axis of the differential, as illustrated in figure 4, and thus enable rotation of the vehicle on itself, with a zero radius. In this situation, the axes 31, 32 of the steering wheels 33, 34 conjoin exactly at the intermediate central point between the two wheel groups 25, 26 of the axle 20. This is a special configuration among those obtainable by means of the structural solution substantially illustrated in figure 3, where two drive inverter groups 29, 30 are located respectively on the two semi-axles 23, 24 exiting from the differential 21. Said two inverter groups are automatically engaged or disengaged according to the entity and direction of steering requested. When the requested steering is of a modest entity, or in any case such that the centre of rotation is external of the axle, as in figure 2, neither of the two inverter groups is enabled and therefore the motion of the two semiaxes 23, 24 and thus of the respective wheels 25, 26 is in a same direction, though having different values, such as normally happens in all traditional differential groups, while when the steering requested is of such an entity that the centre of rotation of the vehicle must be internal of the axle, one or the other of the above-mentioned inverters is enabled such as to cause an inverse rotation of the wheel located internally of the curve.

A consideration however is that the practical implementation of the above-described solution is associated with a certain structural complexity of the axle due not only to the complexity of each drive inverter group but also the fact that the engaging or disengaging of the two inverter groups can occur only thanks to the use of clutch and brake groups duly interposed between the differential and the inverter groups, or also between the inverters and the respective wheel groups.

The main aim of the present invention is to provide a traction axle for self-propelling work machines which enables the aforesaid machines to steer in very modest spaces and exhibits, at the same time, a structural configuration having a limited complexity.

A further aim of the invention is to provide a traction axle for work machines destined to move containers in port areas or the like, and/or in general for moving heavy loads, which enables obtaining minimum steering spaces and which can be manufactured in an industrially economical way.

The above aims and more besides will be attained by means of a traction axle, in particular for self-propelling work machines destined for moving containers, comprising a differential arranged centrally on the axle, wherein a second differential works in combination with the first above-mentioned differential in such a way as to cause same-direction or opposite rotation of the two semi-axles of the axle according to whether the traction drive reaches in input to said first or said second differential.

The second differential comprises its own semiaxles arranged parallel to the semiaxles of the traction axle of the invention, a first semi-axle of the second differential being connected to the corresponding semi-axle of the traction axle of by means of a first pair of cogwheels, a second semi-axle of the second differential being connected to the corresponding semi-axle of the traction axle by means of a second pair of cogwheels, a further cogwheel, free to rotate, being interposed between the wheels of said second pair of wheels. The input drive to the differential arranged centrally on the axle of the invention comes from the traction motor of the work machine; the drive in input to the second differential advantageously comes from an auxiliary hydraulic or electric motor, having sufficient power to enable rotation of the work machine, or it comes from the traction motor via a gearbox which alternatively connects said motor to said main differential or to said second differential.

In the configuration in which the drive reaches in input to the second differential instead of the main differential, the two wheels of the axle rotate in the opposite direction to one another, so the centre of rotation of the vehicle becomes internal of the space comprised between the two wheels, the exact location thereof being a function of the steering angle required. At the maximum steering angle requested, the two wheels rotate at the same velocity and in opposite directions, and the centre of rotation of the vehicle coincides with the centre of the traction axle, thus obtaining the result that the vehicle can in practice rotate on itself, about the vertical axis passing through the main differential.

It is clear that the advantages with respect to both the traditional vehicles at present in use, and with respect to the vehicles in which the solution comprising the inverter groups on the two semiaxes of the axle is adopted, which advantages are associated on the one hand to the possibility of bringing the centre of rotation of the vehicle internally of the space comprised between the drive wheels, and on the other hand to the structural simplicity that is overall obtainable.

Further characteristics and advantages of the present invention will more fully emerge from the detailed description that follows of a preferred, though not exclusive, embodiment, of the invention, illustrated purely by way of non-limiting example, in the accompanying further figures, in which:
figure 5 is a schematic plan view of a traction axle according to the invention;
figure 6 is a further embodiment of the axle of the invention.

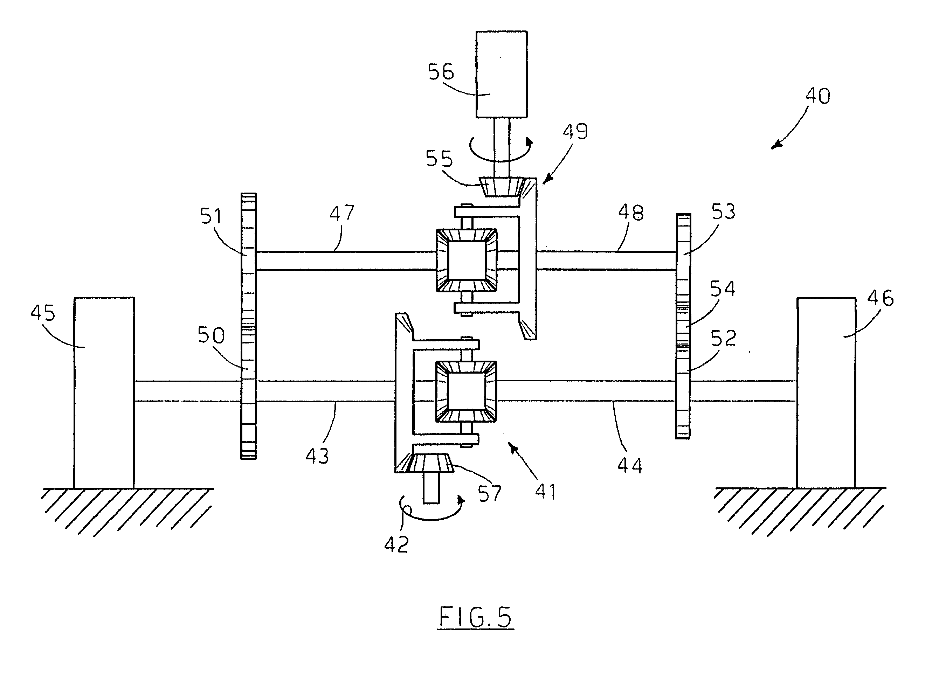

With reference to figure 5, 40 denotes in its entirety a traction axle, in particular for large and high-performance self-propelled work machines. The axle 40 comprises a first differential 41 which is reached by the drive 42 generated by the traction motor of the work machine, and from which two semi-axles 43, 44 branch off towards the two drive wheels 45, 46.

The two semiaxes 43, 44 are respectively coupled in rotation with further two semiaxes 47, 48, exiting from a second differential 49, arranged parallel to the first differential 41; the coupling between the two semiaxes 43, 47, located on a side of the two differentials, is achieved by a simple pair of cogwheels 50, 51, solidly constrained respectively to the semi-axle 43 and the semi-axle 47, while the coupling between the other two semiaxes 44, 48, located on the other side of the differentials, takes place by means of the use of three cogwheels 52, 53, 54, two of which, 52, 54 are solidly constrained respectively to the semi-axle 44 and the semi-axle 48, and the other cogwheel 54 is interposed, freely rotatingly, between said two cogwheels 52, 53.

With this structural configuration it can be observed that, independently of the functioning mode and/or the activation of the two differentials as illustrated in the following, two of the above-mentioned semiaxles 43, 47 always rotate in opposite directions, while the other two semiaxles 44, 48 rotate always in the same direction.

It therefore follows that:
a) in the event that no drive from the auxiliary motor 56 or other sources reaches the input pinion 55 of the second differential 49, and the pinion is kept idle, and in the further event that the traction drive arrives in input to the first differential 41, the drive will be transmitted to the two semi-axles 43, 44 according to the normal modes of the traditional differentials, and therefore said semi-axles will rotate at equal velocities or different velocities but always in the same direction; the semi-axle 47 connected to the semi-axles 43 will rotate in the opposite direction thereto, while the semi-axle 48 drawn in rotation by the satellite and planetary gears of the differential 41 will rotate in the opposite direction to the semi-axle 47 and therefore in the same direction as the semi-axle 43 and the semi-axle 44.
   The possible different rotation velocity, in direction as well as modulus, of the semi-axles 47 and 48 is compensated by the crown of the differential 49 which is idle.
b) in the event that no drive reaches the input pinion 57 of the first differential 41, and the pinion is kept idle, and in the further event that the traction drive arrives in input to the second differential 49, the drive is transmitted to the two semi-axles 47, 48 according to the normal modes of the traditional differentials, and said semi-axles will rotate at a same velocity or different velocities but always in the same direction; the semi-axle 43, connected to the semi-axle 47, will rotate in the opposite direction thereto, while the semi-axle 44 drawn in rotation by the satellite and planetary gears of the differential 49, will rotate in the opposite direction to the semi-axle 43 and in the same direction as the semi-axle 47 and the semi-axle 48.

The possible different rotation velocity, in direction as well as in modulus, of the semi-axles 43 and 44, is compensated by the crown of the differential 41, which is idle.

The result of the above is such that in the first case the semi-axles 43, 44, to which the wheels of the work machine are connected, rotate in the same direction, while in the second case said semi-axles 43, 44 and therefore the wheels 45, 46 rotate in the opposite direction, and thus in the condition in which the centre of rotation of the vehicle during a curve is internal of the space comprised between the two wheels, the exact positioning of said centre of rotation being a function of the difference between the rotation velocity of the wheels, which is also a function of the degree of steering that is to be obtained.

In the limit situation corresponding to the greater degree of steering obtainable, this difference in velocity is nil and the centre of rotation of the vehicle coincides with the vertical axis passing through the centre of the axle. The centre of rotation distances from the above-mentioned vertical axis progressively as a smaller degree of steering is requested. At the moment when, proceeding in the request for a progressively smaller steering, said centre of rotation comes to be positioned at one of the two wheels 45, 46, the rotation velocity of this wheel is annulled and then recommences in the opposite direction, i.e. in the same direction as the other wheel, and said centre of rotation is located externally of the space comprised between the two wheels, and has, from this point onwards, the same behaviour as the vehicles provided with a traditional axle.

Note that the inversion of the rotation velocity of one of the two wheels of the axle takes place, in reference to previous points a) and b), only following the change in the activation of the two differentials 41, 49, i.e. following the change of the transmission of the traction drive from one to the other of said differentials.

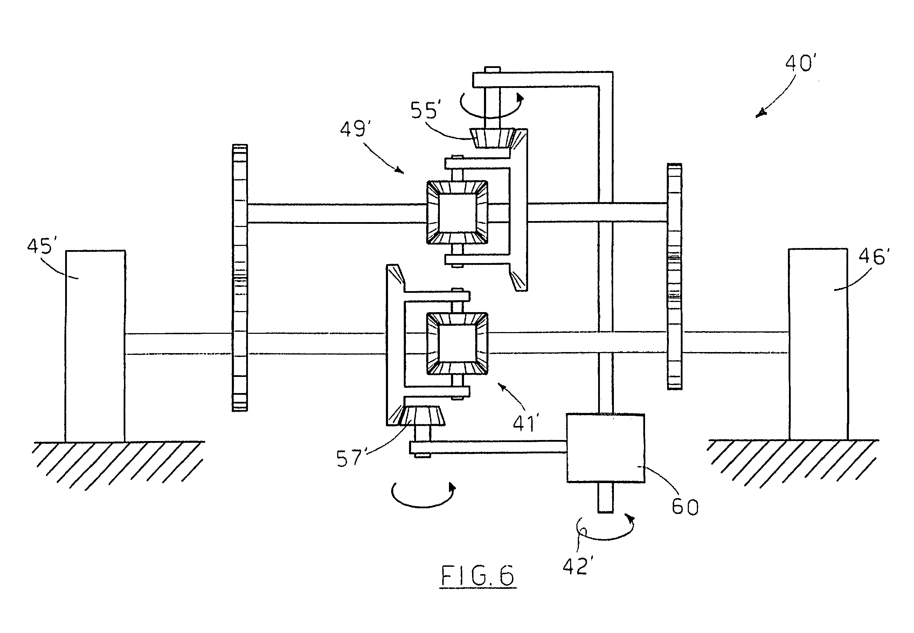

Further note that this change of activation occurs automatically according to the command on the vehicle steering, thanks to a control unit which as a function of various positioning and status signals coming from sensors associated to the vehicle wheels and/or various devices, pilots the above-mentioned gearbox in the activating of the differentials, enabling or not the drive transmission of the main and auxiliary traction motors, or intervening on a true and proper mechanical gearbox for transmission of the traction drive coming from the traction motor of the vehicle, according to the possible schematic structural configuration illustrated in figure 6.

The axle 40' of this embodiment of the invention is provided with a gearbox 60, interposed between the shaft of the traction motor of the vehicle and the pinions 55', 57', of the two differentials 49', 41', positioned and connected to one another according to the diagram of figure 5.

The function of said gearbox 60 is simply to shift the traction drive 42' from one to the other of the pinions 55', 57' of the two differentials 49', 41', which shift is advantageously controlled as a function of the degree of steering that is to be obtained. When a minimum-radius steering is requested, i.e. for which the centre of rotation of the vehicle has to be positioned internally of the two wheels 45', 46' of the vehicle, the gearbox 60 is automatically commanded to transmit the traction drive 42' only towards the pinion 55' of the differential 49'. When, on the other hand, the steering requested is of a smaller entity, so that the centre of rotation of the vehicle is positioned externally of the base perimeter of the vehicle, the gearbox 60 is automatically commanded to transmit the traction drive 42' only towards the pinion 57' of the differential 41'.

Further solutions can certainly be provided, as well as structural configurations comprising various devices that can equally enable activation of one or the other differential, and, consequently, the positioning of the centre of rotation C of the vehicle internally of the axle in automatic mode according to the degree of steering requested.

As well as self-propelling work machines destined to move containers in port areas, the axle of the invention can obviously be applied also to self-propelling machines operating in the sectors when the logistics, i.e. optimisation of the spaces available for storing goods, have a strategic role. Modifications of a practical-applicational nature can be made to the constructional details of the variants and embodiments described above without their forsaking the scope of protection of the inventive idea as claimed herein below.

## Claims

1. A traction axle, in particular for self-propelling work machines, said self-propelling work machines comprising, additionally to said traction axle, idle steering or directing wheels activated by a steering command, where by it comprises a first differential (41) connected by means of two semi-axles (43, 44) to wheels (45, 46) of the work machine and a second differential (49) operating in combination with said first differential (41) such as to obtain an equal or opposite rotation of said semi-axles (43, 44) according to whether the traction motion of the machine is in input to said first differential (41) or to said second differential (49), giving rise to a change of activation, **characterised in that** this change occurs automatically according to the command on the vehicle steering, due to a control unit acting according to various positioning and status signals in arrival from sensors associated to the vehicle wheels.

2. The traction axle (40) according to the preceding claim, **characterised in that** the said control unit acts according to various positioning and status signals in arrival from sensors associated to the vehicle wheels piloting the aforesaid change in activation of the differentials, enabling or not the transmission of drive of main and auxiliary traction motors.

3. The traction axle (40) according to the preceding claim, **characterised in that** said second differential (49) is connected to two further semi-axles (47, 48) arranged parallel to said semi-axles (43, 44) connected to the wheels (45, 46) of the work machine, a first semi-axle (47) of said further semi-axles (47, 48) being connected to the corresponding semi-axle (43) connected to the wheel (45) of the machine by means of a first pair of gears (50, 51), a second semi-axle (48) of said further semi-axles (47, 48) being connected to the corresponding semi-axle (44) connected to the other wheel (46) of the machine by means of a second pair of gears (52, 53), a freely rotating further gear (54) being interposed between the gears of said second pair of gears.

4. The traction axle (40) according to the preceding claim, **characterised in that** the drive in input to said first differential (41) originates from the traction motor of the work machine and the drive in input to said second differential (49) originates from an auxiliary motor (56).

5. The traction axle (40) according to the preceding claim, **characterised in that** the transmission of the drive in input to said first differential (41) takes place alternatively to the transmission of the motion in input to said second differential (49).

6. The traction axle (40') according to claim 1, **characterised in that** it comprises a gearbox (60) interposed between the shaft of the traction motor of the work machine and the pinions (55', 57') of said differentials (41', 49'), said gearbox (60) being suitable for switching the traction motion (42') from one of said pinions (55', 57') to the other.

7. The traction axle (40') according to the preceding claim, **characterised in that** the said control unit acts according to various positioning and status signals in arrival from sensors associated to the vehicle wheels and piloting the aforesaid change in activation of the differential, by intervening on said mechanical transmission gearbox of the traction drive originating from the vehicle traction motor.

8. The traction axle (40') according to the preceding claim, **characterised in that** said gearbox (60) is commanded to automatically switch the traction motion from one of said differentials (41', 49') to the other, according to a steering angle requested for the work machine.

## Patentansprüche

1. Antriebsachse, insbesondere für Arbeitsmaschinen mit Selbstantrieb, wobei diese Arbeitsmaschinen mit Selbstantrieb zusätzlich zur Antriebsachse frei laufende Lenk- oder Steuerungsräder umfassen, die durch eine Lenkschaltung aktiviert werden, wobei diese ein erstes Differenzialgetriebe (41) umfasst, verbunden mittels zwei Achswellen (43, 44) mit Rädern (45, 46) der Arbeitsmaschine, und ein zweites Differenzialgetriebe (49), das in Kombination mit dem ersten Differenzialgetriebe (41) arbeitet, sodass eine gleiche oder gegensätzliche Drehung der Achswellen (43, 44) erhalten wird, je nachdem, ob die Antriebsbewegung der Maschine im Eingang zum ersten Differenzialgetriebe (41) oder zum zweiten Differenzialgetriebe (49) erfolgt, was zu einer Aktivierungsänderung führt, **dadurch gekennzeichnet, dass** diese Änderung automatisch gemäß dem Befehl auf die Fahrzeuglenkung stattfindet, und zwar aufgrund einer Steuereinheit, die gemäß verschiedenen Positionierungs- und Zustandssignalen wirkt, die von mit den Fahrzeugrädern verbundenen Sensoren eingehen.

2. Antriebsachse (40) nach dem vorhergehenden Anspruch, **dadurch gekennzeichnet, dass** die Steuereinheit gemäß verschiedenen Positionierungs- und Zustandssignalen wirkt, die von mit den Fahrzeugrädern verbundenen Sensoren eingehen, steuernd die Aktivierungsänderung der Differenzialgetriebe, wobei die Antriebsübertragung des Haupt- und Hilfsantriebsmotors aktiviert wird oder nicht.

3. Antriebsachse (40) nach dem vorhergehenden Anspruch, **dadurch gekennzeichnet, dass** das zweite Differenzialgetriebe (49) mit zwei weiteren Achswellen (47, 48) verbunden ist, die parallel zu den Achswellen (43, 44), verbunden mit den Rädern (45, 46) der Arbeitsmaschine, angeordnet sind, wobei eine erste Achswelle (47) der weiteren Achswellen (47, 48) mit der entsprechenden Achswelle (43), verbunden mit dem Rad (45) der Maschine, mittels eines ersten Paars an Zahnrädern (50, 51) verbunden ist und eine zweite Achswelle (48) der weiteren Achswellen (47, 48) mit der entsprechenden Achswelle (44), verbunden mit dem anderen Rad (46) der Maschine, mittels eines zweiten Paars an Zahnrädern (52, 53) verbunden ist und ein frei drehendes weiteres Zahnrad (54) zwischen den Zahnrädern des zweiten Paars an Zahnrädern eingesetzt ist.

4. Antriebsachse (40) nach dem vorhergehenden Anspruch, **dadurch gekennzeichnet, dass** der Antrieb im Eingang zum ersten Differenzialgetriebe (41) vom Antriebsmotor der Arbeitsmaschine hervorgerufen wird, und der Antrieb im Eingang zum zweiten Differenzialgetriebe (49) von einem Hilfsmotor (56) hervorgerufen wird.

5. Antriebsachse (40) nach dem vorhergehenden Anspruch, **dadurch gekennzeichnet, dass** die Übertragung des Antriebs im Eingang zum ersten Differenzialgetriebe (41) alternativ zur Übertragung der Bewegung im Eingang zum zweiten Differenzialgetriebe (49) stattfindet.

6. Antriebsachse (40') nach Anspruch 1, **dadurch gekennzeichnet, dass** sie ein Getriebe (60) umfasst, das zwischen der Welle des Antriebsmotors der Arbeitsmaschine und den Antriebsritzeln (55', 57') der Differenzialgetriebe (41', 49') angeordnet ist, wobei das Getriebe (60) geeignet ist, um die Antriebsbewegung (42') von einem der Antriebsritzel (55', 57') auf das andere umzuschalten.

7. Antriebsachse (40') nach dem vorhergehenden Anspruch, **dadurch gekennzeichnet, dass** die Steuereinheit gemäß verschiedenen Positionierungs- und Zustandssignalen wirkt, die von mit den Fahrzeugrädern verbundenen Sensoren eingehen, steuernd die Aktivierungsänderung des Differenzialgetriebes, wobei sie auf das mechanische Getriebe des Antriebs wirken, der vom Antriebsmotor des Fahrzeugs hervorgerufen wird.

8. Antriebsachse (40') nach dem vorhergehenden Anspruch, **dadurch gekennzeichnet, dass** das Getriebe (60) gesteuert wird, um die Antriebsbewegung vom einen der Differenzialgetriebe (41', 49') auf das andere automatisch umzuschalten, und zwar gemäß einem für die Arbeitsmaschine angeforderten Lenkwinkel.

## Revendications

1. Essieu de traction, destiné, en particulier, à des machines de travail autopropulsées, lesdites machines de travail autopropulsées comprenant, en plus dudit essieu de traction, roues de braquage ou de direction folles actionnées par une commande de direction, dans lequel il comprend un premier différentiel (41) relié, au moyen de deux demi-essieux (43, 44), aux roues (45, 46) de la machine de travail et un second différentiel (49) agissant en combinaison avec ledit premier différentiel (41) de manière à obtenir une rotation équivalente ou opposée desdits demi-essieux (43, 44) selon que le mouvement de traction de la machine est en entrée par rapport au dit premier différentiel (41) ou par rapport au dit second différentiel (49), aboutissant à une modification d'actionnement, **caractérisé en ce que** cette modification a lieu automatiquement selon la commande sur la direction du véhicule, en raison d'une unité de commande agissant selon plusieurs signaux d'état et de positionnement provenant de détecteurs associés aux roues du véhicule.

2. Essieu de traction (40) selon la revendication précédente, **caractérisé en ce que** ladite unité de commande agit selon plusieurs signaux de statut et de positionnement provenant de détecteurs associés aux roues du véhicule pilotant la susdite modification dans l'actionnement des différentiels, permettant ou non la transmission de l'entraînement des moteurs de traction principal et auxiliaire.

3. Essieu de traction (40) selon la revendication précédente, **caractérisé en ce que** ledit second différentiel (49) est relié à deux autres demi-essieux (47, 48) disposés parallèlement auxdits demi-essieux (43, 44) reliés aux roues (45, 46) de la machine de travail, un premier demi-essieu (47) desdits autres demi-essieux (47, 48) étant relié au demi-essieu correspondant (43) relié à la roue (45) de la machine au moyen d'une première paire d'engrenages (50, 51), un second demi-essieu (48) desdits autres demi-essieux (47, 48) étant relié au demi-essieu correspondant (44) relié à l'autre roue (46) de la machine au moyen d'une seconde paire d'engrenages (52, 53), un autre engrenage (54) en rotation libre étant interposé entre les engrenages de ladite seconde paire d'engrenages.

4. Essieu de traction (40) selon la revendication précédente, **caractérisé en ce que** l'entraînement en entrée au dit premier différentiel (41) provient du moteur de traction de la machine de travail et l'entraînement en entrée au dit second différentiel (49) provient d'un moteur auxiliaire (56).

5. Essieu de traction (40) selon la revendication précédente, **caractérisé en ce que** la transmission de l'entraînement en entrée au dit premier différentiel (41) se déroule alternativement à la transmission du mouvement en entrée au dit second différentiel (49).

6. Essieu de traction (40') selon la revendication 1, **caractérisé en ce qu'**il comprend une boîte de vitesses (60) interposée entre l'arbre du moteur de traction de la machine de travail et les pinions (55', 57') desdits différentiels (41', 49'), ladite boîte de vitesses (60) étant adaptée à faire passer le mouvement de traction (42') d'un desdits pinions (55', 57') à l'autre.

7. Essieu de traction (40') selon la revendication précédente, **caractérisé en ce que** ladite unité de commande agit selon plusieurs signaux de statut et de positionnement provenant de détecteurs associés aux roues du véhicule et pilotant la susdite modification dans l'actionnement du différentiel en intervenant sur ladite boîte de vitesse à transmission mécanique de l'entraînement de traction provenant du moteur de traction du véhicule.

8. Essieu de traction (40') selon la revendication précédente, **caractérisé en ce que** ladite boîte de vitesse (60) est commandée pour automatiquement permuter le mouvement de traction d'un desdits différentiels (41', 49') à l'autre, selon un angle de braquage demandée par la machine de travail.
